# EUROPEAN PATENT APPLICATION

(11) **EP 4 442 564 A1**
(43) Date of publication of application: **09.10.2024**
(21) Application number: 23207922.8
(22) Date of filing: 06.11.2023
(51) Int. Cl.: B64C 3/18, B64D 27/357

(54) **WING FRAME AND AIRCRAFT INCLUDING SAID WING FRAME**

(30) Priority: 03.04.2023 KR 20230043563
(71) Applicant: HYUNDAI MOTOR COMPANY, Seoul 06797 (KR); Kia Corporation, Seocho-gu Seoul 06797 (KR)
(72) Inventor: JEON, Yoon Cheol, 18280 Hwaseong-si (KR); JANG, Jin Soo, 18280 Hwaseong-si (KR); KIM, Jong Pil, 18280 Hwaseong-si (KR); CHO, Hyun Ki, 18280 Hwaseong-si (KR)
(74) Representative: Viering, Jentschura & Partner mbB Patent- und Rechtsanwälte

(57) **Abstract**

A wing frame includes a front wing beam extending in a left-right direction; a rear wing beam extending in the left-right direction and spaced rearward from the front wing beam, and a plurality of rib parts, each of which includes a middle rib coupled to a rear side of the front wing beam and a front side of the rear wing beam.

## Description

### CROSS REFERENCE TO RELATED APPLICATION(S)

This application claims priority from and the benefit of Korean Patent Application No. 10-2023-0043563, filed on April 03, 2023, which is hereby incorporated by reference for all purposes as if set forth herein.

### TECHNICAL FIELD

The present disclosure relates to a wing frame and an aircraft including the same.

### BACKGROUND

Aircraft that use batteries as a power source (e.g., electric aircraft) should be equipped with multiple batteries. Batteries may be mounted and/or stored in a fuselage of the aircraft. The fuselage may also or alternatively be used a cabin and/or a luggage and/or cargo space. Accordingly, mounting and/or storing batteries in the fuselage reduces a space for passengers and/or luggage and/or cargo.

### SUMMARY

The following summary presents a simplified summary of certain features. The summary is not an extensive overview and is not intended to identify key or critical elements.

Systems, apparatuses, and methods are described for a wing frame and an aircraft comprising the same. A wing frame may comprise a front wing beam extending in a first direction, a rear wing beam extending in the first direction and spaced away from the front wing beam in a second direction perpendicular to the first direction; and a plurality of middle ribs, each of which is coupled to a rear side of the front wing beam and to a front side of the rear wing beam.

An aircraft may comprise a fuselage and a wing coupled to the fuselage. The wing may comprise a wing cover and a wing frame that is located inside the wing cover and coupled to the fuselage. The wing frame may comprise a front wing beam substantially perpendicular to a centerline of the fuselage, a rear wing beam spaced apart from and non-parallel to the front wing beam, a plurality of ribs coupled to the front wing beam and the rear wing beam, said plurality of ribs parallel to one another and perpendicular to the front wing beam, and a plurality of rail brackets coupling the plurality of ribs to the front wing beam of the rear wing beam.

These and other features and advantages are described in greater detail below.

### BRIEF DESCRIPTION OF THE DRAWINGS

The accompanying drawings, which are included to provide a further understanding of the present disclosure and are incorporated in and constitute a part of this specification, illustrate examples of the present disclosure, and together with the description serve to explain the principles of the present disclosure.
FIG. 1 is a perspective view showing an internal structure of a wing in an aircraft according to an example of the present disclosure.
FIG. 2 is a plan view showing an internal structure of a wing in an aircraft according to an example of the present disclosure.
FIG. 3 is a view conceptually showing a vertical cross-section of a wing of an aircraft according to an example of the present disclosure.
FIG. 4 is a perspective view showing a state in which a wing cover is removed from a wing of an aircraft according to an example of the present disclosure.
FIG. 5 is a plan view showing a state in which a wing cover is removed from a wing of an aircraft according to an example of the present disclosure.
FIG. 6 is a perspective view of a portion of a wing frame of an aircraft according to an example of the present disclosure.
FIG. 7 is a perspective view of a region adjacent to a main rib part of a wing frame of an aircraft according to an example of the present disclosure.
FIG. 8 is a perspective view of a region adjacent to a sub rib part of a wing frame of an aircraft according to an example of the present disclosure.

### DETAILED DESCRIPTION

Hereinafter, examples of the present disclosure are described in more detail with reference to the accompanying drawings. When reference numerals are given to elements in each drawing, it should be noted that the same elements are designated by the same reference numerals if possible although they are shown in different drawings. Also, in describing examples of the present disclosure, a detailed description of related known configurations or functions is omitted when it is determined that the understanding of the examples of the present disclosure is hindered by the detailed description.

In describing components of examples of the present disclosure, terms such as first, second, A, B, (a), and (c) may be used. These terms are only used to distinguish one component from other components, and the characteristics, orders, or sequences of the corresponding components are not limited by the terms. When one component is described as being "connected," "coupled," or "linked" to another component, this component may be directly connected, coupled or linked to the other component, but it should be understood that, unless otherwise indicated (e.g., unless it is explicitly stated that the components are "directly connected," "directly coupled," or "directly linked"), still another component may be "connected," "coupled," or "linked" between these components.

Mounting and/or storing batteries in a fuselage may reduce storage space of the fuselage. Thus, it may be beneficial to mount and/or store batteries in and/or on a wing of an aircraft, as described herein. If a wing of an aircraft becomes too heavy (e.g., due to batteries on/in the wing), it may be difficult to control the aircraft. The structure of the wing may be reinforced to withstand the weight of the batteries. The wing of the aircraft may be designed to have some degree of rigidity in order to withstand an external force such as wind load. The wing of the aircraft may be further designed in consideration of an additional element, such as a battery, due to a weight of the additional element.

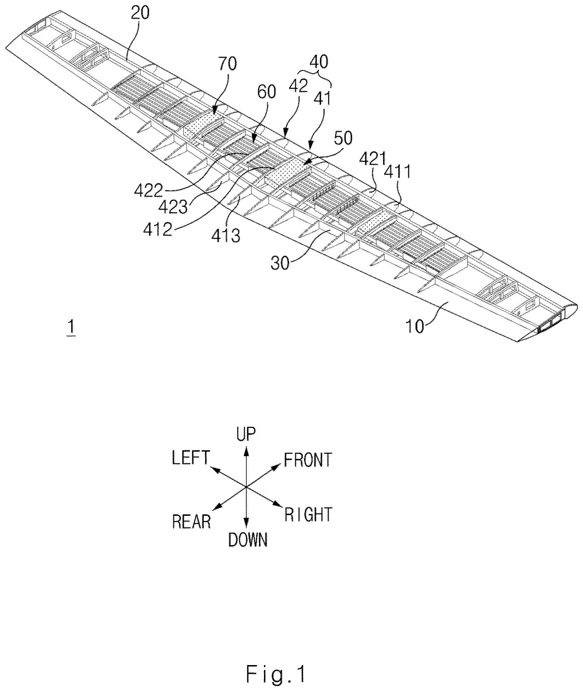

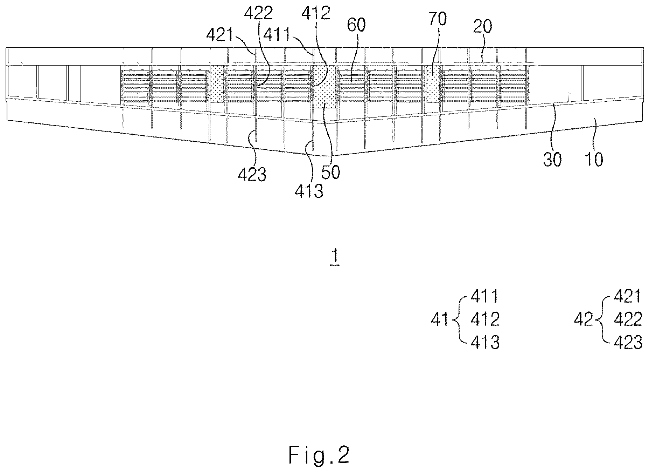

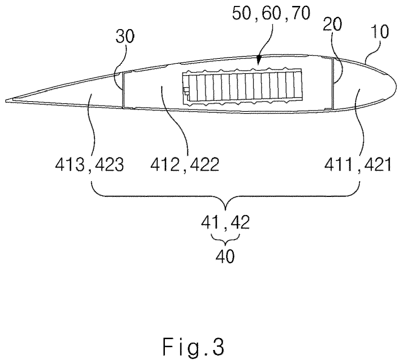

FIG. 1 is a perspective view showing an internal structure of a wing 1 in an aircraft according to an example of the present disclosure. FIG. 2 is a plan view showing the internal structure of the wing 1 in the aircraft according to an example of the present disclosure. FIG. 3 is a view conceptually showing a vertical cross-section of the wing 1 of the aircraft according to an example of the present disclosure.

The wing 1 may be configured for use as part of an aircraft comprising a fuselage (not shown in the drawings). Directions herein will be described in terms of directions relative to the aircraft for which the wing 1 is configured to be used. A front-rear direction is a direction substantially parallel to a line between a front and rear of the aircraft (e.g., an intended primary direction of motion of the aircraft). A left-right direction is a direction substantially perpendicular to the front-rear direction (e.g., a direction perpendicular to an intended primary direction of motion of the aircraft and substantially perpendicular from a direction between a floor of the aircraft and a roof of the aircraft). An up-down direction is a direction substantially perpendicular to both the left-right direction and the front-rear directions (e.g., a direction substantially parallel to the direction between the floor of the aircraft and the roof of the aircraft). A The fuselage may have a shape extending in a front-rear direction of the aircraft and may have a streamlined shape, but the shape thereof is not limited thereto. The fuselage may comprise a cabin configured to hold people (e.g., passengers) and/or a luggage room configured to hold luggage. Also, or alternatively, in the fuselage, various electronic devices or mechanical devices for controlling the aircraft may be installed.

The wing 1 may be coupled to, and/or configured to be coupled to, the fuselage. The wing 1 may extend from the fuselage in the left-right direction (e.g., a direction perpendicular to a longitudinal direction of the fuselage and/or an intended direction of motion of the aircraft). The wing 1 may be coupled to an upper side of the fuselage. The wing 1 may have a symmetrical shape relative to a straight line extending in the front-rear direction.

The wing 1 may include a wing cover 10 and a wing frame. The wing cover 10 may cover the wing frame so that the wing frame is not exposed to the outside, partly or entirely. When viewed from an up-down direction (e.g., as in FIG. 2), a profile of the front side of the wing cover 10 may comprise a straight line that extends in the left-right direction (e.g., top side in FIG. 2). When viewed from the up-down direction (e.g., as in FIG. 2), a profile of the rear side of the wing cover 10 may have a substantially straight line shape that is inclined forward from a central point in the left-right direction to the outside ends in the left-right direction (e.g., bottom side in FIG. 2). In a cross-section taken along a plane perpendicular to the left-right direction (e.g., FIG. 3), the wing cover 10 may have a rounded streamlined profile with a sharp rear end and a forwardly convex front end. However, the shape of the wing cover 10 is not limited thereto.

A plurality of batteries 60 may be provided to store power (e.g., for use in powering the aircraft). One or more of the plurality of batteries battery 60 may be a secondary battery that includes a lithium-ion-polymer battery cell, a lithium-iron phosphate battery cell, etc., but the type of battery cell constituting the battery 60 is not limited thereto. The plurality of batteries 60 may be arranged between adjacent rib parts 40 among a plurality of rib parts 40, as described below. The plurality of batteries 60 may be respectively coupled to a plurality of rail brackets 80, as described below.

The aircraft may include power relay assemblies 50 and/or 70. The power relay assemblies 50 and/or 70 may be electrically connected to the plurality of batteries 60. The power relay assemblies 50 and/or 70 may be configured to be electrically connected to the fuselage. The power relay assemblies 50 and/or 70 may be configured to serve to transmit power from the batteries 60 to the fuselage.

The power relay assemblies 50 and/or 70 may include a plurality of power relay assemblies. The plurality of power relay assemblies 50 and/or 70 may include a central power relay assembly 50 and an outer power relay assembly 70. The central power relay assembly 50 may be located at and/or near the center of the wing frame, in the left-right direction. The outer power relay assembly 70 may not be located at the center. The plurality of power relay assemblies 50 and/or 70 may be symmetrically arranged relative to the left-right direction. The outer power relay assembly 70 may include a plurality of outer power relay assemblies 70 (e.g., arranged to be balanced by weight in the left-right direction).

The wing frame may be located inside (partly or entirely) the wing cover 10. The wing frame may be configured to be coupled to the fuselage. The wing frame may serve as a skeleton of the wing 1 and may be configured to impart rigidity to the wing 1.

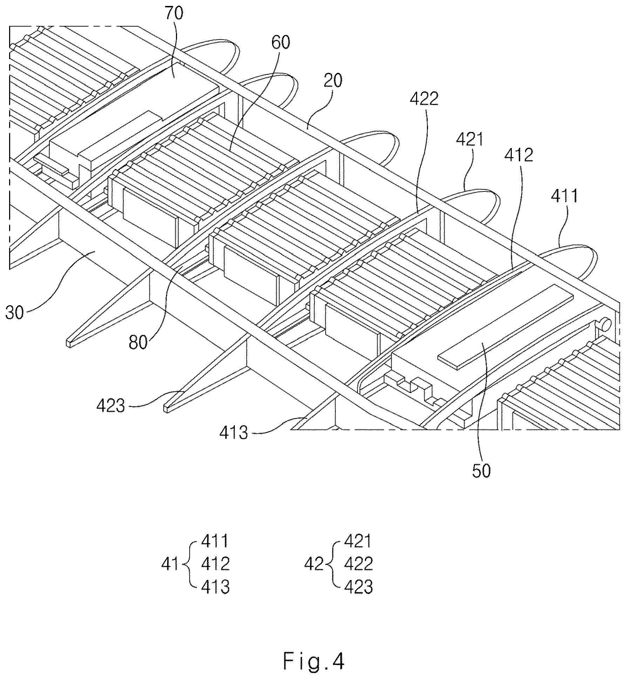

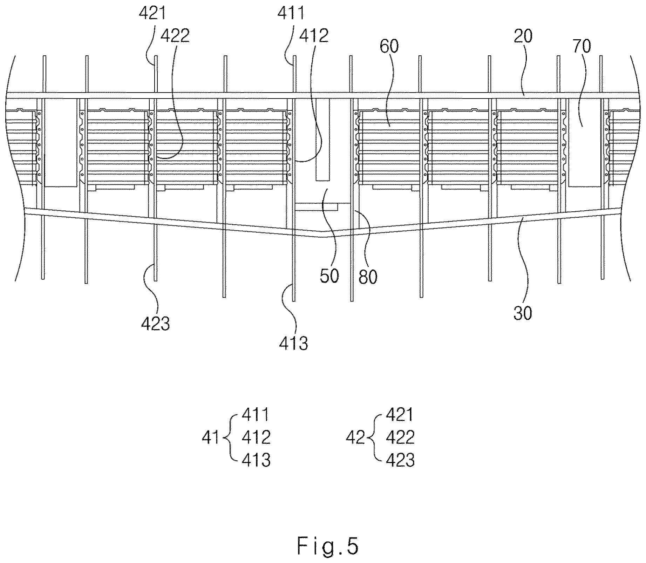

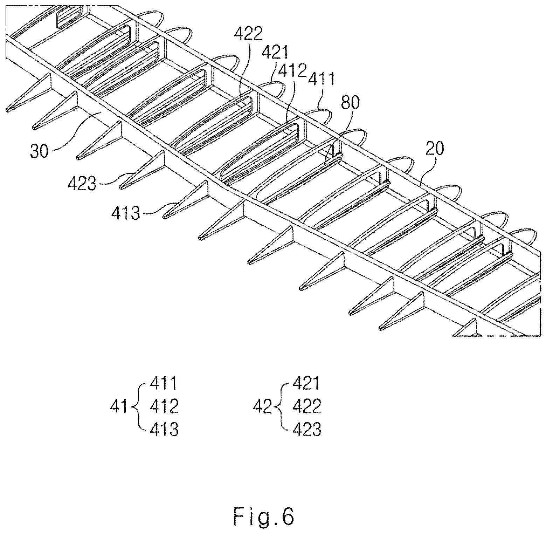

FIG. 4 is a perspective view showing the wing 1 without the wing cover 10, according to an example of the present disclosure. FIG. 5 is a plan view showing the wing 1 without the wing cover 10, according to an example of the present disclosure. FIG. 6 is a perspective view of a portion of a wing frame of an aircraft according to an example of the present disclosure.

The wing frame may include a front wing beam 20, a rear wing beam 30, and a plurality of rib parts 40. The front wing beam 20 may extend in the left-right direction. The front wing beam 20 may have a shape substantially extending perpendicular to the front-rear direction (e.g., perpendicular to a centerline of the wing frame or a fuselage attached to the wing frame), but the shape thereof is not limited thereto. As shown in FIG. 3, the front wing frame may extend farther in an up-down (e.g., vertical) direction relative to the back wing frame.

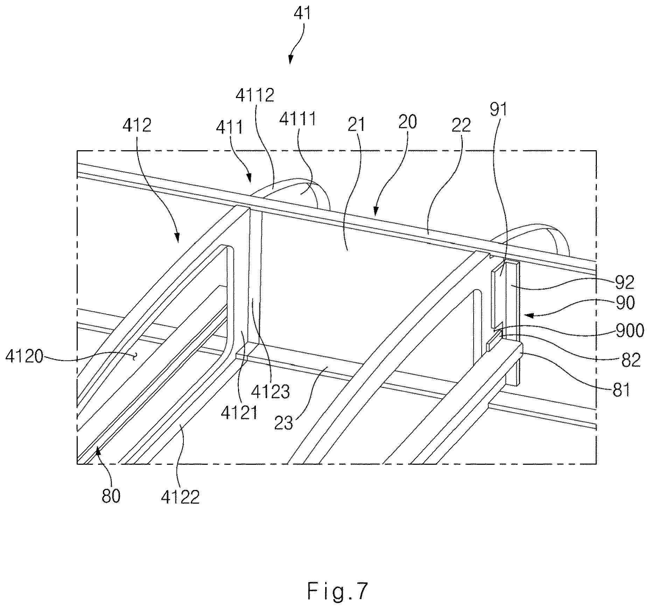

The front wing beam 20 may include a front wing body 21 and front wing peripheral portions 22 and 23 (e.g., as shown in FIG. 7). The front wing body 21 may have a shape substantially perpendicular to the front-rear direction. Middle ribs 412 and 422 may be coupled to the rear surface of the front wing body 21. Front ribs 411 and 421 may be coupled to the front surface of the front wing body 21. The front wing peripheral portions 22 and 23 may protrude rearward from the upper and lower ends of the front wing body 21, respectively. Among the front wing peripheral portions 22 and 23, the portion protruding from the upper end of the front wing body 21 is a front wing-upper peripheral portion 22, and the portion protruding from the lower end thereof is a front wing-lower peripheral portion 23. The front wing peripheral portions 22 and 23 may cover front ends of the middle ribs 412 and 422 (e.g., in the up-down direction). The wing cover 10 may be firmly supported by the front wing peripheral portions 22 and 23.

The rear wing beam 30 may be spaced rearward from the front wing beam 20. The rear wing beam 30 may extend to be inclined forward, from an central point and/or region to the outside in the left-right direction. For example, the rear wing beam 30 may have an approximately 'V' or 'U' shape. A distance from the front wing beam 20 to the rear wing beam 30 may decrease toward from the central point and/or region (e.g., a wing root of the wing 1) to the outside in the left-right direction (e.g., towards wing tips of the wing 1). Accordingly, middle ribs near the central point and/or region may be longer in the front-rear direction than ribs nearer the wing tip (e.g., middle rib 422 may be longer than middle rib 412. The shape of the rear wing beam 30 is not limited thereto.

The rear wing beam 30 may include a rear wing body and rear wing peripheral portions (not shown, may be similar to the front wing body 21, and peripheral portions 22 and 23). The middle ribs 412 and 422 may be coupled to a front surface of the rear wing body. The rear side ribs 413 and 423 may be coupled to the rear surface of the rear wing body. The rear wing peripheral portions may respectively protrude forward from the upper and lower ends of the rear wing body. Among the rear wing peripheral portions, the portion protruding from the upper end of the rear wing body may be a rear wing-upper peripheral portion, and the portion protruding from the lower end thereof may be a rear wing-lower peripheral portion. The rear wing peripheral portions may cover the rear ends of the middle ribs 412 and 422 in the up-down direction. The wing cover 10 to be firmly supported by the rear wing peripheral portions.

The rib parts 40 may be coupled to the front wing beam 20 and the rear wing beam 30. The rib parts 40 may be coupled to the front wing beam 20 and the rear wing beam 30 so as to form the wing frame in which the front wing beam 20 and the rear wing beam 30 are integrated. The plurality of rib parts 40 may be arranged spaced apart from each other in the left-right direction. Each of the rib parts 40 may extend in the front-rear direction. Therefore, the front wing beam 20, the rear wing beam 30, and the plurality of rib parts 40 form a lattice structure, and thus, high rigidity may be given to the wing 1 (the wing 1 may have high rigidity even with a small weight).

The rib parts 40 may include the middle ribs 412 and 422. The middle ribs 412 and 422 may be coupled to the rear side of the front wing beam 20 and the front side of the rear wing beam 30. The front ends of the middle ribs 412 and 422 may be coupled to the rear surface of the front wing beam 20, and the rear ends of the middle ribs 412 and 422 may be coupled to the front surface of the rear wing beam 30. The middle ribs 412 and 422 may be arranged between the front wing beam 20 and the rear wing beam 30. As the plurality of middle ribs 412 and 422 are spaced apart from each other in the left-right direction, the batteries 60 or the power relay assemblies 50 and 70 may be arranged between adjacent middle ribs 412 and 422.

The middle ribs 412 and 422 may include middle rib bodies 4121 and 4221, respectively (see, e.g., FIGS. 7-8). The middle rib bodies 4121 and 4221 may be perpendicular to the left-right direction. The middle ribs 412 and 422 may include middle rib peripheral portions 4122, 4123, and 4223. The middle rib peripheral portions 4122, 4123, and 4223 may protrude from perimeters of the middle rib bodies 4121 and 4221 in the left-right direction. The middle rib peripheral portions 4122, 4123, and 4223 may protrude inward on the basis of the left-right direction. Among the middle rib peripheral portions 4122, 4123, and 4223, the portions protruding from the front and rear ends of the middle ribs 412 and 422 are middle rib front/rear peripheral portions 4123 and 4223, and the portion protruding from each of the upper and lower ends thereof is a middle rib upper/lower peripheral portion 4122. The middle rib front/rear peripheral portions 4123 and 4223 may be coupled to the rear surface of the front wing beam 20 and the front surface of the rear wing beam 30, respectively.

Each of the middle ribs 412 and 422 may include a middle rib opening 4120 through the middle rib bodies 4121 and 4221 in the left-right direction. The middle rib opening 4120 may reduce a weight of the middle ribs 412 and 422, such that the middle ribs 412 and 422 may impart appropriate rigidity to the entire wing frame with reduced weights of the middle ribs 412 and 422. The wing cover 10 may be firmly supported by the middle rib peripheral portions 4122, 4123, and 4223.

The front end portions of the middle ribs 412 and 422 may have stepped shapes. Therefore, the upper and lower ends of the front end portions of the middle ribs 412 and 422 may be locked to the front wing peripheral portions 22 and 23 and may be coupled to the rear surfaces of the front wing peripheral portions 22 and 23 (e.g., as in FIGS. 7-8). The middle regions of the front end portions of the middle ribs 412 and 422 may be inserted into spaces formed by the front wing peripheral portions 22 and 23 and the front wing body 21 and may be coupled to the inner surfaces of the front wing peripheral portions 22 and 23 and the rear surface of the front wing body 21.

The rear end portions of the middle ribs 412 and 422 may have stepped shapes. Therefore, the upper and lower ends of the rear end portions of the middle ribs 412 and 422 may be locked to the rear wing peripheral portions and may be coupled to the front surfaces of the rear wing peripheral portions. Also, the middle regions of the rear end portions of the middle ribs 412 and 422 may be inserted into spaces formed by the rear wing peripheral portions and the rear wing body and may be coupled to the inner surfaces of the rear wing peripheral portions and the front surface of the rear wing body.

The rib parts 40 may include the front ribs 411 and 421. The front ribs 411 and 421 may protrude forward from the front wing beam 20. Each of the front ribs 411 and 421 may have a shape with a forwardly convex front end, but the shape thereof is not limited thereto. The front ribs 411 and 421 may be coupled to the front side of the front wing beam 20. The rear ends of the front ribs 411 and 421 may be coupled to the front surface of the front wing beam 20.

Each of the front ribs 411 and 421 may include a front rib body 4111. The front rib body 4111 may extend perpendicular to the left-right direction. Each of the front ribs 411 and 421 may include a front rib peripheral portion 4112. The front rib peripheral portion 4112 may protrude from the perimeter of the front rib body 4111 in the left-right direction. The front rib peripheral portion 4112 may protrude inward from the perimeter of the front rib body (e.g., towards a center of the wing 1 in the left-right direction). The wing cover 10 may be firmly supported by the front rib peripheral portion 4112.

The rib parts 40 may include the rear ribs 413 and 423. The rear ribs 413 and 423 may protrude rearward from the rear wing beam 30. Each of the rear ribs 413 and 423 may have a shape with a rearwardly sharp rear end, but the shape thereof is not limited thereto. The rear ribs 413 and 423 may be coupled to the rear side of the rear wing beam 30. The front ends of the rear ribs 413 and 423 may be coupled to the rear surface of the rear wing beam 30.

Each of the rear ribs 413 and 423 may include a rear rib body. The rear rib body may extend perpendicular to the left-right direction. Each of the rear ribs 413 and 423 may include a rear rib peripheral portion. The rear rib peripheral portion may protrude from the rear rib body in the left-right direction. The rear rib peripheral portion may protrude from the rear rib body inward (e.g., towards a center of the wing 1 in the left-right direction). The wing cover 10 may be firmly supported by the rear rib peripheral portion.

The wing frame may include a rail brackets 80. A plurality of rail brackets 80 are provided and may be respectively coupled to the plurality of rib parts 40. The batteries 60 and/or the power relay assemblies 50 and 70 may be coupled and/or fixed to the rail brackets 80.

The rail brackets 80 may extend in a direction in which the middle ribs 412 and 422 extend. The rail brackets 80 may be coupled to the middle ribs 412 and 422. When the middle ribs 412 and 422 extend in the front-rear direction, the rail brackets 80 may also extend in the front-rear direction.

The front ends of the rail brackets 80 may be coupled to middle regions of the front ends of the middle ribs 412 and 422 on the basis of the up-down direction. The rear ends of the rail brackets 80 may be coupled to middle regions of the rear ends of the middle ribs 412 and 422 on the basis of the up-down direction.

FIG. 7 is a perspective view of a region adjacent to a main rib part 41 of a wing frame of an aircraft according to an example of the present disclosure.

The plurality of rib parts 40 may include a main rib part 41 and a sub rib part 42. Each of the main rib part 41 and the sub rib part 42 may include a plurality of rib parts. Each of the main rib part 41 and the sub rib part 42 may include all the components of the rib parts 40 described above. For example, the main rib part 41 may include the front rib 411, the middle rib 412, and the rear rib 413, and the sub rib part 42 may include the front rib 421, the middle rib 422, and the rear rib 423.

Each of the rail brackets 80 may include a rail body 81 and a rail reinforcing portion 82. The rail body 81 may extend in a direction in which the middle ribs 412 and 422 extend. The rail reinforcing portion 82 may extend from the rail body 81 and may be coupled to the middle rib 412. The rail reinforcing portion 82 may extend upward from the end of the rail body 81. The rail reinforcing portion 82 may extend from only one end of the rail body 81 or extend from both ends thereof. The rail reinforcing portion 82 may be perpendicular to the left-right direction. As the rail reinforcing portion 82 is placed, the rail brackets 80 may be firmly coupled to the middle rib 412.

The wing frame according to an example of the present disclosure may include a front reinforcing part 90 (e.g., a reinforcement). The front reinforcing part 90 is coupled to the front wing beam 20 and the middle rib 412 and may firmly assist the coupling between the front wing beam 20 and the middle rib 412. The front reinforcing part 90 may be coupled to the outer surface of the middle rib 412 on the basis of the left-right direction. Therefore, the middle rib body 4121 may be firmly supported from the inside by the middle rib peripheral portions 4122 and 4123 and supported from the outside by the front reinforcing part 90 on the basis of the left-right direction. The front reinforcing part 90 may extend in the up-down direction.

The front reinforcing part 90 may include a middle coupling-reinforcing portion 91 that is a portion coupled to the middle rib 412 and a front coupling-reinforcing portion 92 that is a portion coupled to the front wing beam 20. The middle coupling-reinforcing portion 91 may be perpendicular to the left-right direction, and the front coupling-reinforcing portion 92 may be perpendicular to the front-rear direction. The middle coupling-reinforcing portion 91 and the front coupling-reinforcing portion 92 may meet at right angles and may be connected to each other.

An avoidance opening 900 may be formed by passing through the middle coupling-reinforcing portion 91 in the left-right direction. The rail bracket 80 passes through the avoidance opening 900 and may be coupled to the middle rib 412. The front end of the rail body 81 and the rail reinforcing portion 82 may pass through the avoidance opening 900.

The wing frame according to an example of the present disclosure may include a rear reinforcing part. The above descriptions of the front reinforcing part 90 may be applied, in the same manner, to the rear reinforcing part by reversing the front-rear direction.

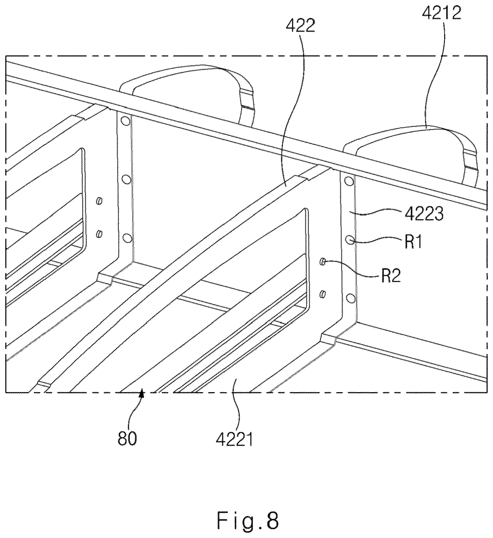

FIG. 8 is a perspective view of a region adjacent to a sub rib part 42 of a wing frame of an aircraft according to an example of the present disclosure.

The front reinforcing part 90 and the rear reinforcing part may be arranged on the main rib part 41 but may not be arranged on the sub rib part 42. However, the front reinforcing part 90 and the rear reinforcing part may also be arranged on the sub rib part 42. The sub rib part 42 may serve to appropriately maintain the rigidity of the wing frame and support the batteries 60 or the power relay assemblies 50 and 70. On the basis of the left-right direction, the sub rib part 42 and the main rib part 41 spaced apart from each other may be alternately arranged in pairs of two.

The wing frame according to an example of the present disclosure may include coupling means R1 and R2 that couple the middle rib 422 to the front wing beam 20 and the rear wing beam 30. The coupling means R1 and R2 may also be used to couple the rail bracket 80 to the middle rib 422. As illustrated in the drawing, the coupling means R1 and R2 may include a first coupling means R1 used to couple the middle rib front/rear peripheral portion 4223 to the front wing beam 20 and a second coupling means R2 used to couple the rail bracket 80 to the middle rib body 4221. However, the coupling means R1 and R2 may also be used to couple other components to each other.

The coupling means R1 and R2 may be used in the main rib part 41 as well as the sub rib part 42. The coupling means R1 and R2 may include at least one of a rivet, a bolt, an adhesive, a nail, or any combination (rivet-bolt, nail-adhesive-bolt, etc.).

Accordingly, it is possible to increases the rigidity of the structure constituting the wing while minimizing the weight increase of the wing.

Examples of the present disclosure provide a wing frame, which increases rigidity of a structure constituting a wing while minimizing a weight increase of the wing, and an aircraft including same.

A first example of the present disclosure provides a wing frame including: a front wing beam extending in a left-right direction; a rear wing beam extending in the left-right direction and spaced rearward from the front wing beam; and a plurality of rib parts, each of which includes a middle rib coupled to a rear side of the front wing beam and a front side of the rear wing beam.

A second example of the present disclosure provides an aircraft including: a fuselage; and a wing coupled to the fuselage, wherein the wing includes a wing cover and a wing frame that is located inside the wing cover and coupled to the fuselage, wherein the wing frame includes a front wing beam, a rear wing beam spaced rearward from the front wing beam, a plurality of rib parts coupled to the front wing beam and the rear wing beam and spaced apart from each other in a left-right direction, and a plurality of rail brackets respectively coupled to the plurality of rib parts.

Even though all the components constituting an example of the present disclosure have been described as being combined as one body or operating in combination, the present disclosure is not necessarily limited to the example. For example, within the scope of the objectives of the present disclosure, all the components may be selectively combined into one or more and then operated. Also, terms such as "include," "constitute," or "have" described above may mean that the corresponding components may be included unless explicitly described to the contrary, and thus should be construed as further including other components rather than excluding other components. Unless otherwise defined, all terms including technical or scientific terms have the same meanings as those generally understood by a person skilled in the art to which the present disclosure pertains. Terms used generally, such as terms defined in dictionaries, should be interpreted as having the same meaning as in an associated technical context, and should not be understood abnormally or as having an excessively formal meaning unless defined apparently in the present disclosure.

The technical ideas of the present disclosure have been described merely for illustrative purposes, and those skilled in the art appreciate that various changes and modifications are possible without departing from the essential features of the present disclosure. Therefore, the examples of the present disclosure are to be considered illustrative and not restrictive, and the technical idea of the present disclosure is not limited to the foregoing examples. The protective scope of the present disclosure is defined by the appended claims, and all technical ideas within their equivalents should be interpreted as being included in the scope of the present disclosure.

## Claims

1. A wing frame comprising:
a front wing beam extending in a first direction;
a rear wing beam extending in the first direction and spaced away from the front wing beam in a second direction perpendicular to the first direction; and
a plurality of middle ribs, each of which is coupled to a rear side of the front wing beam and to a front side of the rear wing beam.

2. The wing frame of claim 1, further comprising a plurality of rail brackets that extend in a direction in which the plurality of middle ribs extend and that are respectively coupled to the plurality of middle ribs.

3. The wing frame of claim 2, wherein each rail bracket of the plurality of rail brackets comprises:
a rail body; and
a rail reinforcing portion extending from the rail body and coupled to a corresponding middle rib.

4. The wing frame of claim 2, wherein, for each rail bracket of the plurality of rail brackets, a front end of the rail bracket is coupled to a middle region, relative to a third direction perpendicular to the first direction and the second direction, of a front end of a corresponding middle rib, of the plurality of middle ribs, and
a rear end of the rail bracket is coupled to a middle region, relative to the third direction, of a rear end of the corresponding middle rib.

5. The wing frame of claim 1, wherein a front end of each middle rib, of the plurality of middle ribs, is coupled to a rear surface of the front wing beam, and
a rear end of each middle rib, of the plurality of middle ribs, is coupled to a front surface of the rear wing beam.

6. The wing frame of claim 5, wherein the front wing beam comprises a front wing body, to which the middle rib is coupled, and a front wing peripheral portion, which protrudes in the second direction, towards the rear wing beam, from each of upper and lower ends of the front wing body, and
the rear wing beam comprises a rear wing body, to which the middle rib is coupled, and a rear wing peripheral portion, which protrudes in the second direction, towards the front wing beam, from each of upper and lower ends of the rear wing body.

7. The wing frame of claim 1, further comprising at least one front reinforcement that is coupled to the front wing beam and to a middle rib of the plurality of middle ribs.

8. The wing frame of claim 7, further comprising a plurality of rail brackets, wherein each rail bracket, of the plurality of rail brackets:
is coupled to a corresponding middle rib of the plurality of middle ribs;
and
extends in a direction in which the corresponding middle rib extends,
wherein the at least one front reinforcement forms an avoidance opening in the first direction, and at least one of the rail brackets, of the plurality of rail brackets, pass through the avoidance opening.

9. The wing frame of claim 1, wherein each middle rib of the plurality of middle ribs comprise a middle rib body, which extends perpendicular to the first direction, and a middle rib peripheral portion, which protrudes, towards a center of the wing frame in the first direction, from a perimeter of the middle rib body.

10. The wing frame of claim 1, wherein each middle rib of the plurality of middle ribs comprises a middle rib body, which extends perpendicular to the first direction, and wherein the middle rib body forms a middle rib opening, which passes through the middle rib body in the first direction.

11. The wing frame of claim 1, further comprising a plurality of front ribs that protrude from the front wing beam away from the plurality of middle ribs.

12. The wing frame of claim 1, further comprising a plurality of rear ribs that protrude from the rear wing beam away from the plurality of middle ribs.

13. The wing frame of claim 1, further comprising a plurality of coupling means that couple the plurality of middle ribs to each of the front wing beam and the rear wing beam,
wherein the plurality of coupling means comprises at least one of a rivet, a bolt, an adhesive or a nail.

14. The wing frame of claim 1, wherein the first direction is substantially perpendicular to a center symmetry line of the wing frame, and the second direction is substantially parallel to the center symmetry line of the wing frame.

15. An aircraft comprising:
a fuselage; and
a wing coupled to the fuselage,
wherein the wing comprises a wing cover and a wing frame that is located inside the wing cover and coupled to the fuselage,
wherein the wing frame comprises a front wing beam substantially perpendicular to a centerline of the fuselage, a rear wing beam spaced apart from and non-parallel to the front wing beam, a plurality of ribs coupled to the front wing beam and the rear wing beam, said plurality of ribs parallel to one another and perpendicular to the front wing beam, and a plurality of rail brackets coupling the plurality of ribs to the front wing beam of the rear wing beam.
